Europäisches Patentamt

European Patent Office

Office européen des brevets

(11) Publication number: **0 244 139**
**A1**

## (12) EUROPEAN PATENT APPLICATION

(21) Application number: **87303473.0**

(22) Date of filing: **21.04.87**

(51) Int. Cl.³: **A 01 D 34/42**
**A 01 D 34/60**

(30) Priority: **01.05.86 GB 8610662**

(43) Date of publication of application:
**04.11.87 Bulletin 87/45**

(84) Designated Contracting States:
**DE FR GB IT NL**

(71) Applicant: Winstanley, Ralph
Wetmoor Lane Wath-upon-Dearne
Rotherham S63 7LR(GB)

(72) Inventor: Winstanley, Ralph
Wetmoor Lane Wath-upon-Dearne
Rotherham S63 7LR(GB)

(74) Representative: Ford, Michael Frederick et al,
MEWBURN ELLIS & CO. 2/3 Cursitor Street
London EC4A 1BQ(GB)

(54) **Power driven cylinder type mowing machine.**

(57) A cylinder type mowing machine having a blade cylinder (14) rotatable between side frame members (16,16) and having a bottom blade (17) with which the blades (30) of the blade cylinder co-operate.

In order that the blade cylinder (14) can be driven by a hydraulic motor but without unduly increasing the width of the machine, and so that the hydraulic motor is protected from damage in use, the hydraulic motor (18) is contained within the blade cylinder (14) and connected to an engine driven pump by way of oil supply tubes extending through a non-rotatable central shaft (36,38).

FIG.6.

- 1 -

<u>Power driven cylinder type mowing machine.</u>

The invention relates to a power driven cylinder type mowing machine.

Cylinder type mowing machines are very well known and include a blade cylinder having cutting blades extending helically between a plurality of spaced discs. . The blade cylinder is rotatable about a horizontal axis and co-operates with a so-called bottom blade which extends across the underside of the machine and engages each of the cutting blades in turn as the blade cylinder rotates. The bottom blade extends between the lower portions of respective side frames between which the blade cylinder is mounted in bearings.

Various means have been employed for driving the blade cylinder. For example, an endless chain drive from an internal combustion engine has been used. However, such drive means are usually rather noisy and are subject to rapid wear. Means are usually provided for taking up the slack in the chain drive, but these add a certain amount of complexity, require adjustment from time to time, and add to the noise of operation of the machine if not properly adjusted.

Hydraulic motor drives have been used for powering the blade cylinders of cylinder type mowing machines particularly in so-called gang mowers but it has generally been found that the width of the hydraulic motor alongside one or the other of the side frames of the machine has unduly increased the overall width of the machine. In addition, a hydraulic motor located alongside one or the other of the side frames is vulnerable to damage if it should strike an obstruction.

The invention as claimed is intended to provide a remedy. It solves the problem of how to design a cylinder type mowing machine in a most convenient manner.

The advantages offered by the invention are, mainly, that it provides a cylinder type mowing machine the blade cylinder of which is powered by at least one hydraulic motor but without unduly increasing the overall width of the machine, if in fact increasing its width at all. The invention in addition results in a very smooth and quiet driving of the blade cylinder because it adds to the weight of the blade cylinder and improves the flywheel effect of its rotation during its operation.

One way of carrying out the invention is described in detail below with reference to drawings which illustrate, by way of example, one specific embodiment, in which:-

Figure 1 is a perspective view of a so-called gang mower embodying the invention,

Figure 2 is a somewhat diagrammatic part sectional plan view of one of the blade cylinders forming a part of the gang mower,

Figure 3 is a diagrammatic exploded view illustrating the mounting of the blade cylinder,

Figures 4, 5 and 6 are semi-diagrammatic views similar to Figure 2 which illustrate possible modifications of the blade cylinder, and

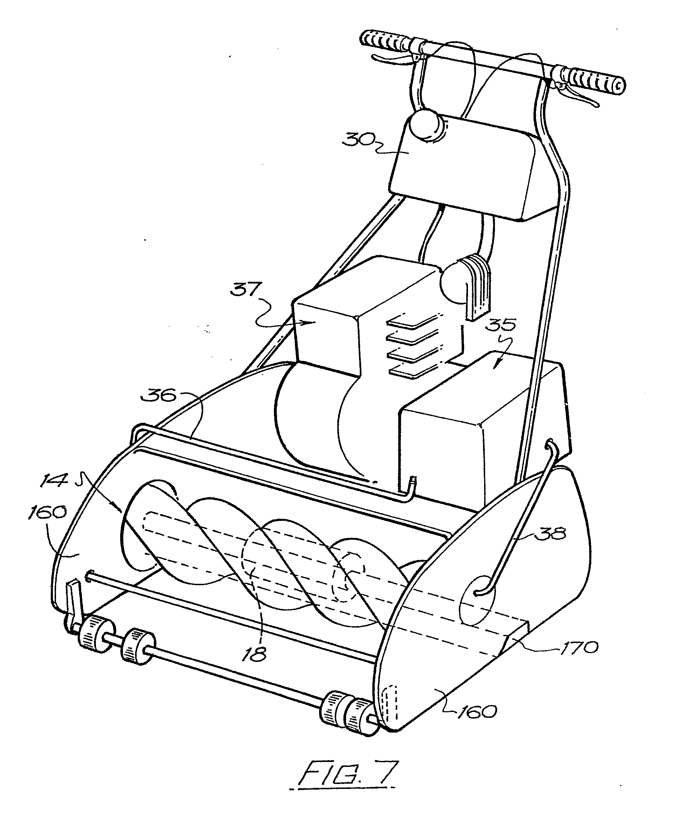

Figure 7 is a perspective view illustrating a domestic type of mowing machine to which the invention has been applied.

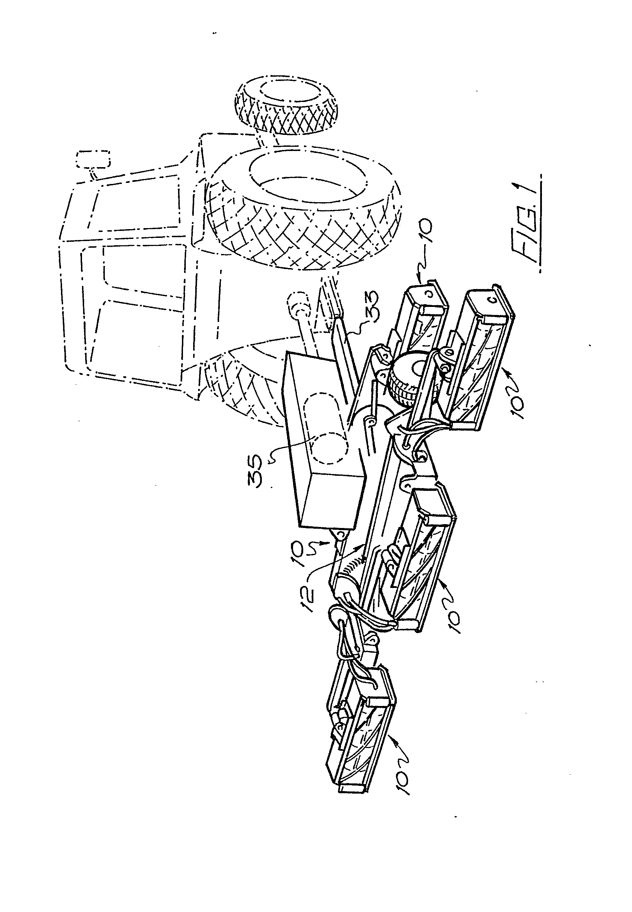

Referring now to Figure 1 of the drawings, the gang mower there illustrated is a well known kind of mower for mowing areas of parkland for example. As shown, it includes a plurality of mower units 10 carried by a frame 12 which is adapted to be towed behind a tractor such as that illustrated in chain-dotted lines. The gang mower illustrated by way of example in Figure 1 has five mower units but it will be understood that in fact any number of mower units can be provided to suit the particular requirements.

As shown, the gang mower is provided with a

- 4 -

drawbar 33 by means of which it can be connected to a tractor. Mounted on the frame of the mower is a hydraulic pump 35 which can be driven by the power-take-off shaft of the tractor, the pump providing hydraulic fluid under pressure for driving the mower units as will presently be described.

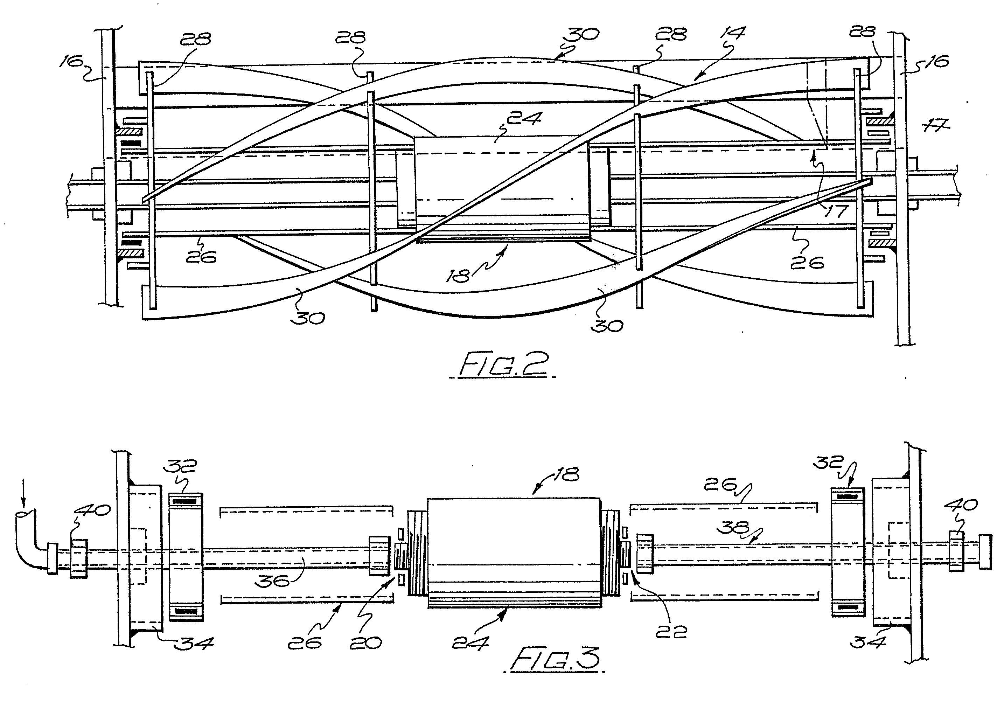

Referring now in particular to Figure 2, each mower unit includes a blade cylinder 14 located for rotation between side frame members 16,16 of a skeletal box frame connected by linkage mechanism to the frame 12. The blade cylinder co-operates with a bottom blade 17 which extends across the underside of the respective box frame and engages each of the cutting blades of the blade cylinder in turn as the blade cylinder rotates. The opposite ends of the bottom blade are secured to the undersides of the respective side frame members 16,16.

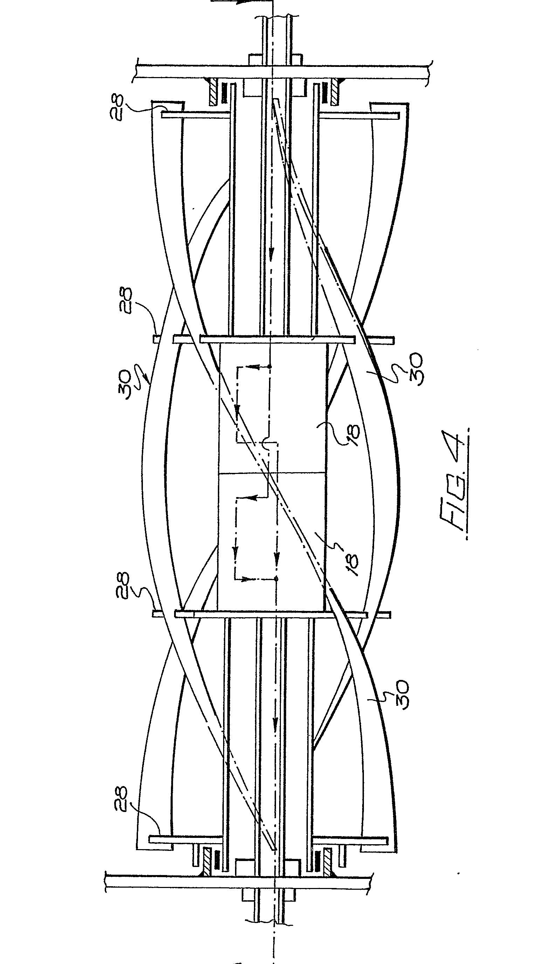

As shown in Figures 2 and 3, the blade cylinder 14 is drivable by a hydraulic motor 18 which is located intermediate the ends of said blade cylinder. The internal construction of the hydraulic motor is not shown. Suffice to say that it is of generally conventional construction but has respective axial inlet and outlet ports 20 and 22, for the hydraulic fluid under pressure by which it is powered, at its opposite ends. The outer casing 24 of the hydraulic motor is fast with respective cylinder mounting tubes 26,26 which project from its opposite ends. Four equally spaced discs 28 are fast with the mounting tubes, and the cutting blades 30 of the blade cylinder extend helically between the discs, as shown.

Referring now in particular to Figure 3, the blade cylinder is mounted for rotation between the side frame members in roller bearings 32,32, the latter being located in respective bearing housings 34 welded to or formed integrally with the side frame members 16,16 of the respective skeletal frame. The bearings surround portions of the mounting tubes 26,26 which project outwards from the outermost discs 28.

A supply tube 36 for conveying oil under pressure from the pump 35 to the particular hydraulic motor 18, and an oil return pipe 38 for conveying oil from the motor back to the pump, extend axially of the blade cylinder and do not rotate; they are in fact made fast by means of coupling nuts 40,40 to the "rotor" part of the motor which is fixed to the side frame members and take the torque reaction of the motor. The central "rotor" part of the motor remains fixed whilst drive to the blade cylinder is from the outer casing of the motor which is fixed with respect to the discs 28 and cutting blades 30.

It will of course be understood that Figures 2 and 3 are somewhat diagrammatic because in practice the supply tube 36 and the oil return pipe 38 of the relatively small diameter illustrated would probably not be capable of taking the considerable torque reaction of the motor. Rather more substantial tubes will probably be required, but this will be able to be determined by trial and experiment.

The advantage of the drive arrangement just described is that there is a space saving advantage, since the hydraulic motor of each mower unit does not project outwards from the outer surface of one of the side frames of the mower unit. The hydraulic motors are also much less vulnerable to damage than when located alongside one of the side frame members of each mower unit as in earlier machines. In addition the weight of the main body part of the hydraulic motor, fixed with respect to the particular blade cylinder, gives a flywheel effect to the rotation of the blade cylinder without extra weight having to be built into the latter for that purpose.

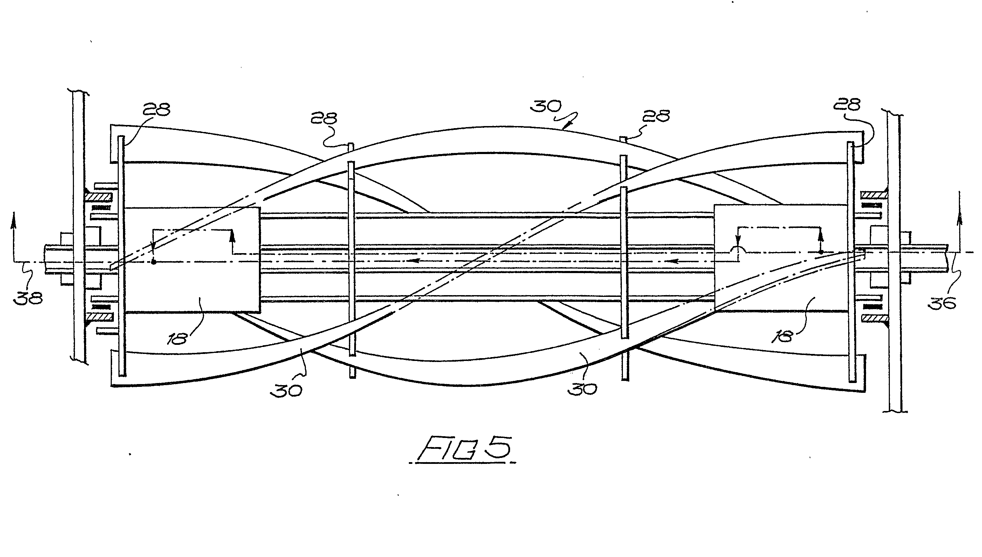

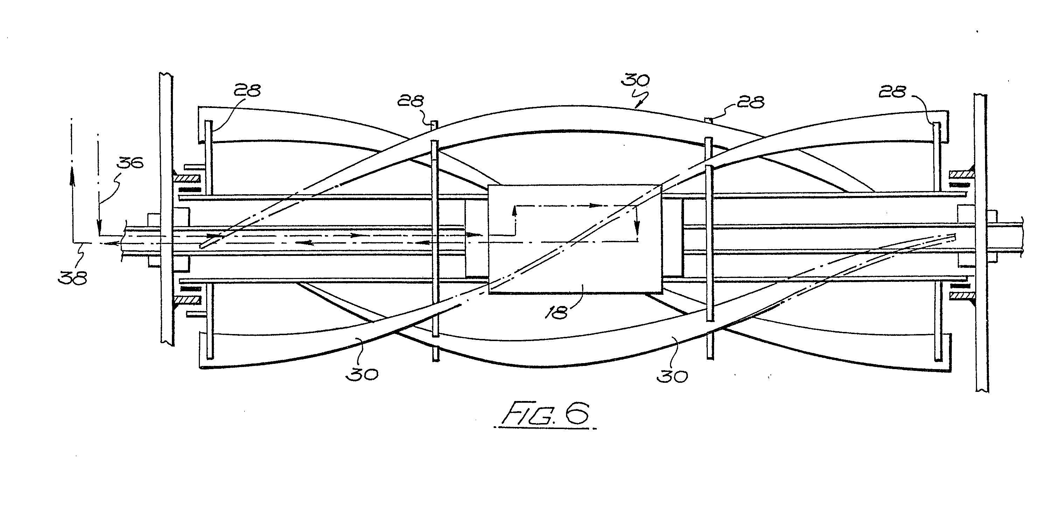

Various modifications may be made. For example, it would be quite possible for the blade cylinder to have two hydraulic motors located within it. The two motors could be arranged back to back as shown in Figure 4 and connected as shown to respective supply and exhaust tubes for hydraulic fluid extending from the respective side frames. Alternatively, the two motors could be set into the opposite ends of the blade cylinder as shown in Figure 5, the two motors again being connected to respective supply and exhaust passages for hydraulic fluid extending through the central spindle of the blade from the respective side frames. As shown in Figure 5, the two motors 18,18 which are built into the opposite ends of the cylinder are both connected to passages 36 and 38 which respectively convey hydraulic fluid under pressure to and from said motors.

It will be understood that it is not essential for the supply and exhaust tubes to and from the at least one hydraulic motor to extend from the opposite ends of the motor. In Figure 6 there is illustrated an arrangement in which the supply and exhaust tubes 36,38 both extend from one end of the motor and extend through one side frame member of the machine.

The invention is of course applicable to any cylinder type mowing machine and not simply the gang type mower illustrated in Figure 1 by way of
example. The invention could be used to power the
blades of a domestic motor driven mower. In Figure
7 there is illustrated a domestic type of mowing
machine in which a blade cylinder, generally
indicated 14, and constructed as previously described
with reference to any one of Figures 4 to 6, is
located for rotation about a horizontal axis between
side frame members 160,160. The blade cylinder
co-operates with a bottom blade 170 which extends
across the underside of the machine and engages
each of the cutting blades of the blade cylinder
in turn as the blade cylinder rotates. The opposite
ends of the bottom blade are secured to the undersides of the respective side frame members 160,160.

The blade cylinder is powered in this case
by an internal combustion engine 37, the latter being
fed with fuel from a fuel tank 33. The engine is
drivably connected to a hydraulic pump 35 the
output of which is fed to the passage 36 feeding
the hydraulic motor.

The domestic type of mower just described
has the same advantages over conventional mowers
as the gang type mower previously described,
namely the fact that the location of the at least one hydraulic motor within the blade cylinder gives a space saving advantage and very effectively protects the motor from damage which might be caused by collision with any obstruction, and also that the weight of the body part of the hydraulic motor, fixed with respect to the blade cylinder, gives a flywheel effect to the rotation of the blade cylinder.

0244139

-10-

CLAIMS:

1.  A power driven cylinder type mowing machine having a blade cylinder (14) rotatable between side frame members (16,16) about a horizontal axis, and a bottom blade (17) with which the blades (30) of the blade cylinder co-operate, at least one hydraulic motor being provided for driving the blade cylinder and the at least one hydraulic motor being powered by an engine driven pump, characterised in that the hydraulic motor (18) is contained within the blade cylinder (14) and connected to an engine driven pump (35) by way of oil supply tubes (36,38) extending through at least one of the side frame mambers (16,16) of the machine.

2.  A power driven cylinder type mowing machine according to claim 1, further characterised in that at least one hydraulic motor (18) is mounted centrally of the width of the blade cylinder (14).

3.  A power driven cylinder type mowing machine according to claim 1, further characterised in that the blade cylinder (14) is provided with a pair of hydraulic motors (18,18) located within it, the motors being connected to respective supply and exhuast tubes (36,38) for hydraulic fluid extending from the respective side frames (16,16).

4.  A power driven cylinder type mowing machine according to claim 1, further characterised in that it includes a hydraulic pump (35) connected to the at least one hydraulic motor (18) contained within the blade cylinder (14).

5. A power driven cylinder type mowing machine according to claim 4, further characterised in that it includes a plurality of mower units (10) carried by a frame (12) adapted to be towed behind a tractor, each mower unit (10) having a blade cylinder (14) rotatable about a horizontal axis between side frame members (16,16) of a box frame and a bottom blade (17) with which the blades(30) of the blade cylinder (14) co-operate, the machine including a hydraulic pump (35) connected to the at least one hydraulic motor (18) contained within each mower unit (10) for driving its blade cylinder (14) the hydraulic pump (35) being adapted to be driven from the power-take-off shaft of the tractor.

6. A power driven cylinder type mowing machine according to claim 4, further characterised in that it includes an engine (37) drivably connected to the pump (35).

_FIG.1_

FIG.2

FIG.3

0244139

FIG.4

FIG 5

FIG. 6

30

37

35

36

14

160

38

18

170

160

*FIG. 7*

0244139

## EUROPEAN SEARCH REPORT

European Patent Office

Application number

### DOCUMENTS CONSIDERED TO BE RELEVANT

EP 87303473.0

| Category | Citation of document with indication, where appropriate, of relevant passages | Relevant to claim | CLASSIFICATION OF THE APPLICATION (Int. Cl 4) |
|---|---|---|---|
| A | GB - A - 1 254 912 (NORTON VILLIERS LTD.)  * Claims 1-4; fig. 2, parts 37,38 * | 1,4-6 | A 01 D 34/42  A 01 D 34/60 |
| A | DE - A - 2 044 812 (N.V.PHILIPS' GLOEILAMPENFABRIEKEN)  * Page 4, lines 9-12; claim 3; fig. 2 * | 1 | |
| A | DE - A - 2 328 088 (AGRIA WERKE GMBH)  * Claim 1; fig. 2 * | 1 | |
| A | GB - A - 1 432 343 (RANSOMES, SIMS AND JEFFERIES LTD.)  * Claim 1 * | 1 | **TECHNICAL FIELDS SEARCHED (Int. Cl.4)** |
| A | DE - A - 2 141 706 (WOLF-GERÄTE GMBH)  ---- | | A 01 D 34/00  A 01 D 55/00 |

The present search report has been drawn up for all claims

| Place of search | Date of completion of the search | Examiner |
|---|---|---|
| VIENNA | 17-07-1987 | MENTLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82